# EUROPÄISCHE PATENTSCHRIFT

(11) **EP 3 736 417 B1**
(45) Veröffentlichungstag und Bekanntmachung des Hinweises auf die Patenterteilung: **05.01.2022**
(21) Anmeldenummer: 20182865.4
(22) Anmeldetag: 21.06.2018
(51) Int. Cl.: F01N 9/00, F01N 13/00, G01L 23/24

(54) **BRENNKRAFTMASCHINE, INSBESONDERE ALS ANTRIEBSMOTOR FÜR EIN FAHRZEUG**
COMBUSTION ENGINE, ESPECIALLY AS A DRIVING MOTOR FOR A VEHICLE
MOTEUR À COMBUSTION INTERNE, EN PARTICULIER EN TANT QUE MOTEUR D'ENTRAÎNEMENT POUR UN VÉHICULE

(30) Priorität: 12.07.2017 DE 102017115599
(43) Veröffentlichungstag der Anmeldung: 11.11.2020
(62) Teilanmeldung aus: 18178950.4
(73) Patentinhaber: MAN Truck & Bus SE, 80995 München (DE)
(72) Erfinder: Fesl, Manfred, 80995 München (DE); Reichert, Sebastian, 80995 München (DE)
(74) Vertreter: v. Bezold & Partner Patentanwälte - PartG mbB

(56) Entgegenhaltungen:
- EP-A1- 2 320 040
- EP-A1- 3 034 843
- EP-A1- 3 034 844
- EP-A2- 2 772 741
- DE-A1-102008 050 252
- DE-A1-102012 218 214
- US-A1- 2008 196 395
- US-A1- 2015 096 533

## Beschreibung

Die Erfindung betrifft eine Brennkraftmaschine, insbesondere als Antriebsmotor für ein Fahrzeug, nach dem Oberbegriff des Patentanspruchs 1, ein Verfahren zum Betreiben einer Brennkraftmaschine nach dem Oberbegriff des Patentanspruchs 13 sowie ein Fahrzeug mit der Brennkraftmaschine nach Patentanspruch 14.

Es ist allgemein bekannt, an einer Brennkraftmaschine als Antriebsmotor eines Fahrzeugs eine Motorbremseinrichtung, insbesondere eine Motorstaubremse, vorzusehen, bei der zur Motorbremsung und somit auch zur Fahrzeugabbremsung ein durch einen Abgasstrang strömendes Abgas mittels eines dem Abgasstrang zugeordneten Drosselelements rückgestaut wird. Zur Einstellung der Motorbremswirkung ist dabei üblicherweise, in Abgas-Strömungsrichtung gesehen, stromauf des Drosselelements in einem definierten Nahbereich im Bereich des Drosselelements ein Drucksensor zur Messung des Abgasdrucks angeordnet, der signaltechnisch mit einem Steuergerät zur Steuerung eines Stellmotors verbunden ist, mittels dem das Drosselelement verlagerbar und/oder verschwenkbar und somit die Drosselwirkung einstellbar ist. In Abhängigkeit von dem mittels des Drucksensors gemessenen Abgasdruck wird dabei mittels des Steuergeräts die optimale Stellung des Drosselelements ermittelt und der Stellmotor zur Verschwenkung bzw. Verlagerung des Drosselelements in diese optimale Drosselstellung angesteuert.

Aus der EP 3 034 844 A1 ist beispielsweise eine Motorbremsvorrichtung für eine Brennkraftmaschine in Kraftfahrzeugen bekannt, bei dem die Brennkraftmaschine ein Ansaugsystem, ein Abgassystem, brennkraftmaschinenseitige Gaswechselventile, eine Abgasturboaufladung sowie eine Motorbremseinrichtung aufweist. Diese Motorbremseinrichtung umfasst eine, wenigstens ein Auslassventil der Gaswechselventile beeinflussende Dekompressionsbremse sowie auch eine in dem Abgassystem angeordnete, das Abgas rückstauende Bremsklappe. Dabei ist hier, in Abgas-Strömungsrichtung gesehen, stromauf der Bremsklappe ein Drucksensor zur Messung des Abgasdrucks angeordnet, der signaltechnisch mit einem Motorsteuergerät der Brennkraftmaschine verbunden ist. Mittels dieses Motorsteuergeräts kann die Bremsklappe bzw. eine Stelleinrichtung zur Einstellung der Bremsklappen-Stellung gesteuert werden.

Dokument US 2008/196395 A1 betrifft ein Abgasreinigungssystem für einen Verbrennungsmotor, das einen Hochdruck-PM-Filter-Regenerationsprozess durch Verringern des Öffnungsgrads einer Abgasdrosselklappe beim Regenerieren der Partikelabscheidekapazität eines Partikelfilters durchführt. Das Dokument beschreibt u. a. eine Motorsteuerung (ECU), die mit mehreren Sensoren wie einem Luftmengenmesser, einem Abgastemperatursensor, einem Abgasdrucksensor und einem Druckdifferenzsensor verbunden ist.

Dokument DE 10 2012 218214 A1 offenbart einen Drucksensor zur Messung eines Drucks eine fluiden Mediums, insbesondere zur Druckmessung in einem Druckkraftverstärker eines Kraftfahrzeugs. Der Drucksensor weist ein Gehäuse auf. Der Drucksensor weist weiterhin einen Druckstutzen und mindestens einen elektrischen Anschluss auf. In dem Gehäuse sind wenigstens zwei voneinander unabhängige Sensorelemente angeordnet.

Problematisch ist es jedoch, wenn das an das Steuergerät übermittelte Messsignal des Drucksensors fehlerhaft ist bzw. nicht dem tatsächlichen Abgasdruck entspricht. Dann kann es zu einer unbeabsichtigten bzw. falschen Verstellung des Drosselelements kommen, was beispielsweise zu einem ungewollten Beschleunigen der Brennkraftmaschine und somit auch eines die Brennkraftmaschine als Antriebsmotor aufweisenden Fahrzeugs führen kann.

Aufgabe der Erfindung ist es daher, eine Brennkraftmaschine, insbesondere als Antriebsmotor für ein Fahrzeug, sowie ein Verfahren zum Betreiben einer Brennkraftmaschine bereitzustellen, bei denen die Motorbremswirkung mit erhöhter Zuverlässigkeit wie gewünscht eingestellt wird.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Brennkraftmaschine, insbesondere als Antriebsmotor für ein Fahrzeug, vorgeschlagen, mit einer Motorbremseinrichtung, wobei die Motorbremseinrichtung ein, einen Abgasstrang zugeordnetes Drosselelement, insbesondere eine Drosselklappe, zur Rückstauung eines von einer Verbrennungseinrichtung emittierten Abgases aufweist, und mit einer Messeinrichtung, mittels der der Abgasdruck an einem definierten Messbereich des Abgasstrangs, in Abgas-Strömungsrichtung gesehen, stromauf des Drosselelements gemessen werden kann. Erfindungsgemäß ist wenigstens eine weitere Messeinrichtung vorgesehen, mittels der, insbesondere zur Realisierung einer redundanten Abgasdruckmessung, ebenfalls der Abgasdruck an dem definierten Messbereich gemessen werden kann. Zudem können die mittels der Messeinrichtungen ermittelten Messsignale an ein Steuergerät, insbesondere an ein Steuergerät zur Steuerung des Drosselelements, übermittelt werden.

Auf diese Weise wird die Motorbremswirkung mit erhöhter Zuverlässigkeit wie gewünscht eingestellt, da der Abgasdruck an den definierten Messbereich nun mehrfach gemessen und die ermittelten mehreren Messsignale dann an das Steuergerät übermittelt werden. Das Steuergerät kann die übermittelten Messsignale abgleichen und auf diese Weise eine Plausibilitätsprüfung durchführen. Für den Fall, dass das Steuergerät bei einer zu großen Abweichung der Messsignale voneinander eine fehlerhafte Druckmessung ermittelt, kann das Steuergerät das Drosselelement beispielsweise in eine Grundstellung bringen, in der das Drosselelement keine bzw. nur eine sehr geringe Rückstauwirkung aufweist. Mittels der mehreren Messeinrichtungen wird somit auf einfache und effektive Weise eine redundante Abgasdruckmessung realisiert.

In einer bevorzugten Ausgestaltung der erfindungsgemäßen Brennkraftmaschine zweigt an dem definierten Messbereich von einer Abgasleitung des Abgasstrangs eine Verbindungsleitung ab, über die ein Innenraum der Abgasleitung druckübertragend mit einem Druckraum einer die Messeinrichtungen aufweisenden Druck-Ermittlungseinrichtung verbunden ist, insbesondere dergestalt, dass in dem Druckraum im Wesentlichen nur der hydrostatische Abgasdruck bzw. der Abgas-Staudruck wirkt. Auf diese Weise kann der aktuelle Abgasdruck an dem definierten Messbereich des Abgasstrangs einfach und effektiv mittels der mehreren Messeinrichtungen gemessen werden.

In einer bevorzugten konkreten Ausgestaltung ragt die Verbindungsleitung im Wesentlichen im rechten Winkel von der Abgasleitung ab. Weiter bevorzugt weist die Verbindungsleitung eine 90°-Strömungsumlenkung auf, um einen einfachen und effektiven Aufbau zu realisieren. Für einen besonders einfachen Aufbau ist die Verbindungsleitung durch einen im Wesentlichen L-förmigen Rohrabschnitt gebildet. Alternativ könnte die Verbindungsleitung auch durch einen temperaturresistenten Schlauch gebildet sein.

In einer bevorzugten konkreten Ausgestaltung weist eine die Messeinrichtung aufweisende Druck-Erfassungseinrichtung wenigstens ein Verformungselement, insbesondere ein Membranelement und/oder eine Druckzelle, für die Druckmessung auf, das einen Druckraum der Druck-Erfassungseinrichtung nach außen begrenzt und/oder ausbildet und sich druckabhängig verformt, wobei jede Messeinrichtung eine auf ein Verformungselement aufgebrachte elektrische Messschaltung aufweist. Auf diese Weise kann der Abgasdruck einfach und effektiv redundant gemessen werden. Das Verformungselement oder wenigstens ein Verformungsbereich des Verformungselements kann dabei beispielsweise aus einem Keramikmaterial gefertigt sein.

Die jeweilige elektrische Messschaltung kann beispielsweise durch eine elektrische Widerstandsschaltung gebildet sein. Auf diese Weise kann ein piezoresistives Messprinzip für die Druckmessung realisiert werden, bei dem sich bei einer Verformung des Verformungselements der elektrische Widerstand der Schaltung messbar verändert. Alternativ kann die jeweilige elektrische Messschaltung auch durch eine elektrische Kapazitätsschaltung gebildet sein. Bei einer Verformung des Verformungselements ändert sich hier dann die elektrische Kapazität der Schaltung messbar.

In einer bevorzugten konkreten Ausgestaltung weist die Druck-Erfassungseinrichtung ein einziges Verformungselement auf, wobei auf einem Teilbereich dieses Verformungselements eine elektrische Messschaltung einer ersten Messeinrichtung aufgebracht ist, und wobei auf einen weiteren Teilbereich des Verformungselements eine elektrische Messschaltung einer zweiten Messeinrichtung aufgebracht ist. So kann die Druck-Erfassungseinrichtung besonders kompakt ausgebildet werden.

Alternativ kann die Druck-Erfassungseinrichtung auch mehrere, insbesondere zwei, Verformungselements aufweisen, wobei auf ein erstes Verformungselement eine elektrische Messschaltung einer ersten Messeinrichtung aufgebracht ist, und wobei auf ein zweites Verformungselement eine elektrische Messschaltung einer zweiten Messeinrichtung aufgebracht ist. Auf diese Weise kann die Druck-Erfassungseinrichtung mit einem vereinfachten Aufbau realisiert werden.

In einer weiteren bevorzugten konkreten Ausgestaltung ist jeder Messschaltung eine Signal-Ermittlungsschaltung zugeordnet, mittels der ein den aktuellen Abgasdruck in dem Druckraum repräsentierendes Messsignal ermittelt werden kann. So kann die Druck-Erfassungseinrichtung ebenfalls mit einem besonders einfachen Aufbau realisiert werden. Bevorzugt ist dabei vorgesehen, dass die jeweilige Signal-Ermittlungsschaltung durch einen applikationsspezifischen integrierten Halbleiterschaltkreis (ASIC) gebildet ist, um die Signal-Ermittlungsschaltung einfach und effektiv auszuführen.

Alternativ kann den mehreren Messschaltungen auch nur eine einzige Signal-Ermittlungsschaltung zugeordnet sein, mittels der den aktuellen Abgasdruck in dem Druckraum repräsentierende Messsignale ermittelt werden können. Auf diese Weise kann ein besonders kompakter Aufbau der Druck-Erfassungseinrichtung realisiert werden. Bevorzugt ist dabei vorgesehen, dass diese Signal-Ermittlungsschaltung ebenfalls durch einen applikationsspezifischen integrierten Halbleiterschaltkreis (ASIC) gebildet ist.

Weiter bevorzugt weist die Druck-Erfassungseinrichtung eine Signal-Umwandlungseinrichtung, insbesondere einen Mikrokontroller auf, mittels der die von der wenigstens einen Signal-Ermittlungsschaltung ermittelten Messsignale auf einen definierten Signal-Standard umgewandelt werden können. Mittels einer derartigen Signal-Umwandlungseinrichtung können die Messsignale beispielsweise auf den Signal-Standard eines Bordnetzes eines Fahrzeugs gebracht. Das umgewandelte Messsignal kann dann einfach und effektiv an das Steuergerät übermittelt und von dem Steuergerät ausgewertet werden. Bevorzugt ist dabei vorgesehen, dass die umgewandelten Messsignale einen gegenläufigen druckabhängigen Signalverlauf aufweisen, um die Überprüfung der Messsignale mittels des Steuergeräts im Hinblick auf ihre Plausibilität zu vereinfachen bzw. weiter zu verbessern. Beispielsweise kann als umgewandeltes Messsignal druckabhängig ein Signal von 0 Volt bis 5 Volt ausgegeben werden.

Weiter bevorzugt weist die Druck-Erfassungseinrichtung wenigstens einen in einem definierten Nahbereich im Bereich einer Messschaltung angeordneten Temperatursensor zur Messung und/oder Abschätzung der Temperatur der Messschaltung auf. Mittels eines derartigen Temperatursensors kann einer temperaturbedingten Messungenauigkeit der Messschaltung effektiv entgegengewirkt werden. Bevorzugt ist dabei vorgesehen, dass der Temperatursensor signalübertragend mit der wenigstens einen Signal-Ermittlungsschaltung verbunden ist.

Eine die Messeinrichtungen aufweisende Druck-Erfassungseinrichtung weist ein Gehäuse auf, in dem die Messeinrichtungen angeordnet sind. So können die Messeinrichtungen einfach und effektiv vor äußeren Einflüssen geschützt werden. Bevorzugt ist dabei vorgesehen, dass in dem Gehäuse auch der wenigstens eine Temperatursensor und/oder die Signal-Umwandlungseinrichtung und/oder die wenigstens eine Signal-Ermittlungsschaltung angeordnet ist.

Zur Realisierung eines besonders kompakten Aufbaus ist in dem Gehäuse auch ein Stellmotor zur Einstellung der Drosselposition des Drosselelements angeordnet.

Weiter bevorzugt bildet das Gehäuse zusammen mit den darin angeordneten Komponenten eine Baueinheit aus, die an der Brennkraftmaschine, insbesondere an einer Abgasleitung und/oder an einem Aktuator-Gehäuse bzw. Stellmotorgehäuse der Brennkraftmaschine, festgelegt werden kann. So kann die Druck-Erfassungseinrichtung einfach und effektiv an die Brennkraftmaschine montiert werden. Diese Baueinheit kann dabei einen Standalone-Sensor ausbilden oder als integrierte Sensoreinheit für den Einbau in oder an ein zusätzliches Gehäuse, beispielsweise eines Aktuators, ausgebildet sein. Bevorzugt ist vorgesehen, dass das Gehäuse eine Befestigungseinrichtung aufweist, mittels der das Gehäuse an der Abgasleitung befestigt werden kann. Die Befestigungseinrichtung kann dabei beispielsweise durch mehrere abragende Laschen mit durchgängigen Bohrungen gebildet sein. Bei einer Befestigung des Gehäuses an einer als Gußbauteil ausgebildeten Abgasleitung weist die Abgasleitung bevorzugt eine ebene Anlagefläche auf, mit der das Gehäuse zur Befestigung an der Abgasleitung in flächige Anlage bringbar ist.

Vorzugsweise weist das Gehäuse wenigstens ein, eine analoge oder digitale Schnittstelle bildendes Anschlusselement zur signaltechnischen Verbindung der Druck-Erfassungseinrichtung mit einem Steuergerät und/oder zur Verbindung der Druck-Erfassungseinrichtung mit einer elektrischen Energie-Versorgungseinrichtung auf. So kann die Druck-Erfassungseinrichtung einfach und effektiv mit dem Steuergerät bzw. mit der Energie-Versorgungseinrichtung verbunden werden. Eine analoge Schnittstelle weist vorzugsweise Anschlüsse für Versorgungsspannung (U+), Masse (Gnd), Drucksignal 1 (p₁) und Drucksignal 2 (p₂) auf. Eine digitale Schnittstelle kann beispielsweise durch einen CAN-, LIN- oder SENT-Bus gebildet sein.

Zur Lösung der bereits genannten Aufgabe wird ferner ein Verfahren zum Betreiben einer Brennkraftmaschine, insbesondere als Antriebsmotor für ein Fahrzeug, beansprucht, wobei die Brennkraftmaschine eine Motorbremseinrichtung aufweist, die ein, einem Abgasstrang zugeordnetes Drosselelement, insbesondere eine Drosselklappe, zur Rückstauung eines von einer Verbrennungseinrichtung der Brennkraftmaschine emittierten Abgases aufweist, wobei die Brennkraftmaschine eine Messeinrichtung aufweist, mittels der der Abgasdruck in einem definierten Messbereich des Abgasstrangs, in Abgas-Strömungsrichtung gesehen, stromauf des Drosselelements gemessen wird. Erfindungsgemäß ist wenigstens eine weitere Messeinrichtung vorgesehen, mittels der, insbesondere zur Realisierung einer redundanten Abgasdruckmessung, ebenfalls der Abgasdruck an dem definierten Messbereich gemessen wird. Die mittels der Messeinrichtungen ermittelten Messsignale werden dann an ein Steuergerät, insbesondere an ein Steuergerät zur Steuerung des Drosselelements, übermittelt.

Des Weiteren wird auch ein Fahrzeug, insbesondere ein Nutzfahrzeug, mit der erfindungsgemäßen Brennkraftmaschine beansprucht.

Die sich durch die erfindungsgemäße Verfahrensführung und das erfindungsgemäße Fahrzeug ergebenden Vorteile sind identisch mit den bereits gewürdigten Vorteilen der erfindungsgemäße Brennkraftmaschine, so dass diese an dieser Stelle nicht wiederholt werden. Die Erfindung und ihre vorteilhaften Aus- und/oder Weiterbildungen sowie deren Vorteile werden nachfolgend anhand von Zeichnungen lediglich beispielhaft näher erläutert.

### Es zeigen:

- Figur 1: eine schematische Darstellung einer erfindungsgemäßen Brennkraftmaschine;
- Figur 2: eine schematische Darstellung, anhand der der Aufbau einer Druck-Erfassungseinrichtung der Brennkraftmaschine näher erläutert wird;
- Figur 3: in einer schematischen Schnittdarstellung einen Teil der Druck-Erfassungseinrichtung;
- Figur 4: ein Diagramm, anhand dem die Funktionsweise der Druck-Erfassungseinrichtung näher erläutert wird;
- Figur 5: in einer schematischen Schnittdarstellung eine zweite Ausführungsform der Druck-Erfassungseinrichtung;
- Figur 6: in einer Darstellung gemäß Figur 5 eine dritte Ausführungsform der Druck-Erfassungseinrichtung; und
- Figur 7: in einer Darstellung gemäß Figur 5 eine vierte Ausführungsform der Druck-Erfassungseinrichtung.

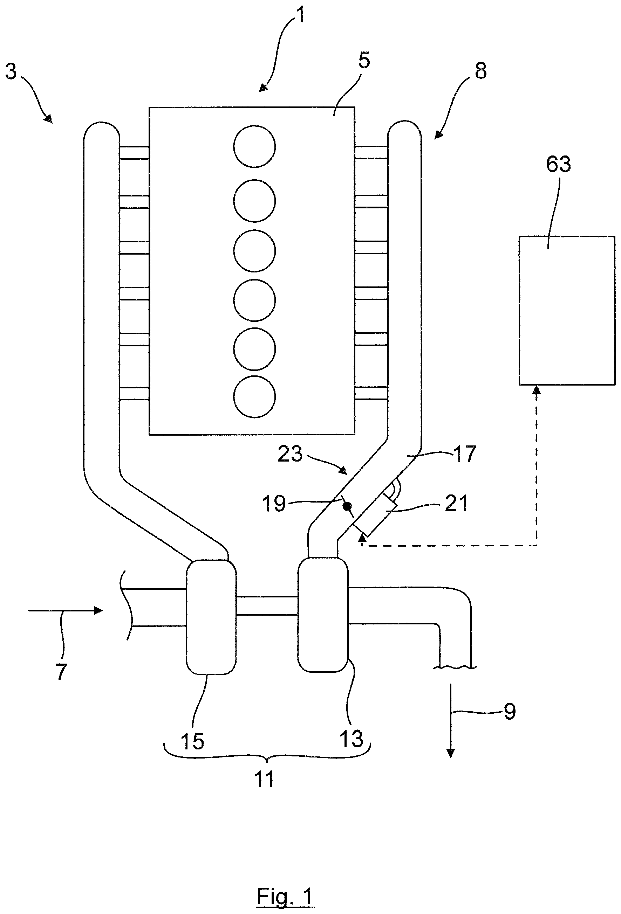

In Figur 1 ist schematisch ein Teil einer erfindungsgemäßen Brennkraftmaschine 1 gezeigt, die beispielsweise durch einen sechszylindrigen Dieselmotor gebildet sein kann. Die Brennkraftmaschine 1 weist einen hier teilweise gezeigten Ansaugtrakt 3 auf, mittels dem einer Verbrennungseinrichtung 5 der Brennkraftmaschine 1 Verbrennungsluft 7 zugeführt werden kann. Zudem weist die Brennkraftmaschine 1 auch einen hier teilweise gezeigten Abgasstrang 8 auf, über den von der Verbrennungseinrichtung 5 emittiertes Abgas 9 in die freie Umgebung geleitet wird. Weiter weist die Brennkraftmaschine 1 hier beispielhaft auch einen Abgasturbolader 11 mit einer Abgasturbine 13 und einem Luftverdichter 15 auf.

Gemäß Figur 1 weist die Brennkraftmaschine 1 weiter auch einen in einer Abgasleitung 17 des Abgasstrangs 8 angeordnetes, hier beispielhaft durch eine Drosselklappe gebildetes Drosselelement 19 auf, mittels dem das von der Verbrennungseinheit 5 emittierte Abgas 9 rückgestaut werden kann. Diese Drosselklappe 19 ist Bestandteil einer Motorbremseinrichtung der Brennkraftmaschine 1, mittels der beispielsweise ein die Brennkraftmaschine 1 als Antriebsmotor aufweisendes Fahrzeug abgebremst werden kann. Die Drosselklappe 19 ist hier dabei, in Abgas-Strömungsrichtung gesehen, stromauf der Abgasturbine 13 an bzw. in dem Abgasleitung 17 angeordnet.

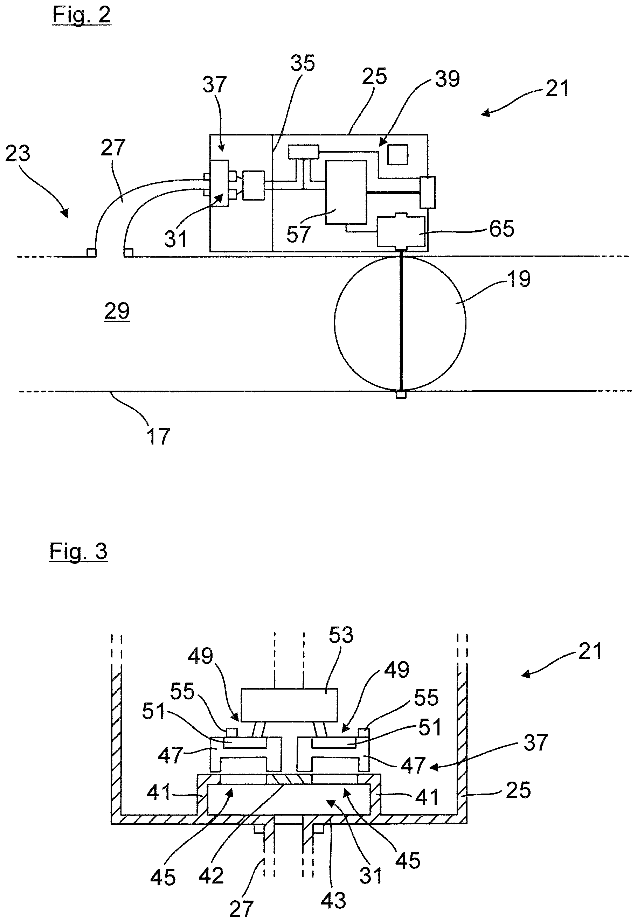

Weiter ist in Figur 1 auch eine Druck-Erfassungseinrichtung 21 der Brennkraftmaschine 1 gezeigt, mittels der der Abgasdruck an einem definierten Messbereich 23 des Abgasstrangs 8, in Abgas-Strömungsrichtung gesehen, stromauf der Drosselklappe 19 im Bereich der Drosselklappe 19 gemessen werden kann. Der Aufbau dieser Druck-Erfassungseinrichtung 21 wird im Folgenden anhand von Figur 2 näher erläutert:
Wie aus Figur 2 hervorgeht, weist die Druck-Erfassungseinrichtung 21 ein hier beispielhaft blockförmiges bzw. kastenförmiges Gehäuse 25 auf, in dem mehrere Komponenten der Druck-Erfassungseinrichtung 21 angeordnet sind. Dieses Gehäuse 25 kann beispielsweise aus Stahl gefertigt sein. Zudem weist die Druck-Erfassungseinrichtung 21 hier auch eine Verbindungsleitung 27 auf, mittels der die Abgasleitung 17 mit dem Gehäuse 25 der Druck-Erfassungseinrichtung 21 verbunden ist. Diese Verbindungsleitung 27 zweigt an dem definierten Messbereich 23 von der Abgasleitung 17 des Abgasstrangs 8 ab und ragt hier beispielhaft im rechten Winkel von der Abgasleitung 17 ab. Zudem ist die Verbindungsleitung 27 hier beispielhaft durch einen L-förmigen Rohrabschnitt gebildet, der sich ausgehend von der Abgasleitung 17 hin zu dem Gehäuse 25 verjüngt. Der L-förmige Rohrabschnitt 27 ist hier dabei an seinen Endbereichen mittels Schweißverbindungen mit der Abgasleitung bzw. mit dem Abgasrohr 17 und dem Gehäuse 25 verbunden. Alternativ könnte der Rohrabschnitt 27 auch in das Abgasrohr 17 oder in das Gehäuse 25 eingeschraubt sein oder mittels einer Klemmschelle oder einer Überwurfmutter mit dem Abgasrohr 17 und/oder mit dem Gehäuse 25 verbunden sein.

Über die Verbindungsleitung 27 ist ein Innenraum 29 der Abgasleitung 17 hier derart druckübertragend mit einem Druckraum 31 des Gehäuses 25 verbunden, dass in dem Druckraum 31 im Wesentlichen nur der hydrostatische Abgasdruck wirkt. Das Gehäuse 25 mit den darin angeordneten Komponenten bildet hier beispielhaft eine Baueinheit 33 aus, die an der Abgasleitung 17 festgelegt werden kann. Hierzu weist das Gehäuse 25 eine in den Figuren nicht gezeigte Befestigungseinrichtung auf, mittels der das Gehäuse 25 mit der Abgasleitung 17 verbunden werden kann. Alternativ wäre es aber auch denkbar, dass das Gehäuse 25 mit den darin angeordneten Komponenten zusammen mit der Verbindungsleitung 27 eine Baueinheit ausbildet.

Gemäß Figur 2 weist das Gehäuse 25 hier auch eine Trennwand 35 auf, mittels der ein Messraum 37 des Gehäuses 25 von einem Signalverarbeitungsraum 39 des Gehäuses 25 abgetrennt ist. Wie aus Figur 3 deutlicher hervorgeht, ist der Messraum 37 hier zudem über weitere Trennwände 41, 42 von dem Druckraum 31 des Gehäuses 25 abgetrennt. Die Trennwände 41 ragen hier dabei von einer Außenwand 43 des Gehäuses 25 nach innen ab und sind mit der parallel zu der Außenwand 43 verlaufenden Trennwand 42 verbunden. Die Trennwände 41, 42 bilden hier dabei zusammen mit der Außenwand 43 den Druckraum 31 aus, der hier beispielhaft im Querschnitt rechteckförmig ausgebildet ist.

Wie in Figur 3 weiter gezeigt ist, weist die Trennwand 42 des Gehäuses 25 hier zwei durchgängige Ausnehmungen 45 auf. Jeder dieser Ausnehmungen 45 ist hier ein Verformungselement bzw. eine Druckzelle 47 zugeordnet, das abdichtend mit der Trennwand 42 verbunden sind, so dass die Verformungselemente 47 ebenfalls den Druckraum 31 ausbilden bzw. begrenzen. Jedes dieser Verformungselemente 47 bildet hier eine Messeinrichtung aus, mittels der der Abgasdruck an dem Messbereich 23 der Abgasleitung 17 gemessen werden kann. Auf diese Weise wird eine redundante Abgasdruckmessung realisiert. Die Verformungselemente 47 können dabei beispielsweise mittels Klebeverbindungen abdichtend an der Trennwand 42 festgelegt sein.

Jedes Verformungselement 47 weist hier beispielhaft einen dünnwandigen Verformungsbereich 49 auf, der sich zur Messung des Abgasdrucks in Abhängigkeit von dem Abgasdruck in dem Druckraum 31 verformt. Auf den Verformungsbereich 49 des jeweiligen Verformungselements 47 ist eine elektrische Messschaltung 51 aufgebracht. Diese elektrische Messschaltung ist hier beispielhaft durch eine elektrische Widerstandsschaltung gebildet, die in Abhängigkeit von der Verformung des Verformungsbereichs 49 ihren elektrischen Widerstand ändert.

Die mehreren elektrischen Messschaltungen 51 sind hier mit einer einzigen Signal-Ermittlungsschaltung 53 verbunden, mittels der in Abhängigkeit von dem aktuellen elektrischen Widerstand der jeweiligen Widerstandsschaltung 51 den aktuellen Abgasdruck in dem Druckraum 31 repräsentierende Messsignale ermittelt werden können. Diese Signal-Ermittlungsschaltung 53 ist hier beispielhaft durch einen applikationsspezifischen integrierten Halbleiterschaltkreis (ASIC) gebildet. Weiter ist hier auch jedem Verformungselement 47 ein Temperatursensor 55 zugeordnet, mittels dem die Temperatur der jeweiligen elektrischen Messschaltung 51 gemessen bzw. abgeschätzt wird. Diese Temperatursensoren 55 sind ebenfalls signalübertragend mit der Signal-Ermittlungsschaltung 53 verbunden.

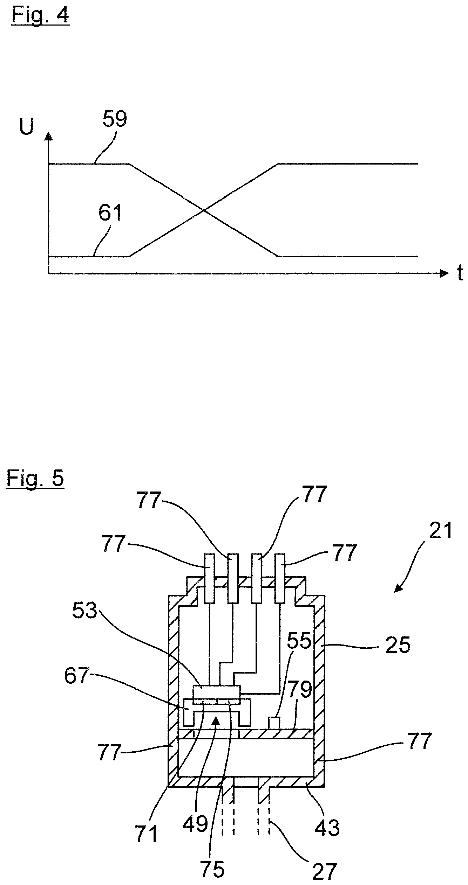

Wie weiter aus Figur 2 hervorgeht, befinden sich die Verformungselemente 47 und die Signal-Ermittlungsschaltung 53 in dem Messraum 37 des Gehäuses 25. In dem Signalverarbeitungsraum 39 des Gehäuses 25 befindet sich eine signaltechnisch mit der Signal-Ermittlungsschaltung 53 verbundene Signal-Umwandlungseinrichtung 57, mittels der die von der Signal-Ermittlungsschaltung 53 ermittelten Messsignale auf einen definierten Signal-Standard umgewandelt werden. Diese Signal-Umwandlungseinrichtung 57 kann beispielsweise durch einen Mikrokontroller gebildet sein. Die Messsignale werden hier beispielhaft derart umgewandelt, dass die umgewandelten Messsignale einen gegenläufigen druckabhängigen Signalverlauf aufweisen. Ein Beispiel für derartige Signalverläufe ist in Figur 4 gezeigt. Dabei ist das umgewandelte Messsignal hier durch ein elektrisches Spannungssignal U gebildet. Eine Kurve 59 zeigt hier dabei den zeitabhängigen Verlauf eines ersten umgewandelten Messsignals. Eine Kurve 61 zeigt den zeitabhängigen Verlauf eines zweiten umgewandelten Messsignals.

Gemäß Figur 2 ist die Signal-Umwandlungseinrichtung 57 hier weiter signaltechnisch mit einer CAN-Schnittstelle des Gehäuses 25 verbunden, über die die Signal-Umwandlungseinrichtung 57 signaltechnisch mit einem Steuergerät 63 (Figur 1) der Brennkraftmaschine 1 verbunden ist. Mittels des Steuergeräts 63 können die mittels der Messeinrichtung ermittelten Messsignale ausgewertet und Steuerbefehle zur Ansteuerung eines Stellmotors 65 zur Einstellung der Drosselstellung der Drosselklappe 19 ermittelt werden. Diese Steuerbefehle werden an den Mikrokontroller 57 übermittelt. Der Mikrokontroller 57 steuert den Stellmotor 65 dann dementsprechend an. Gemäß Figur 2 ist der Stellmotor 65 hier ebenfalls in dem Gehäuse 25 der Druck-Erfassungseinrichtung 21 angeordnet.

In Figur 5 ist eine zweite Ausführungsform der Druck-Erfassungseinrichtung 21 gezeigt. Im Vergleich zu der in Figur 2 und Figur 3 gezeigten ersten Ausführungsform ist hier nur ein einziges Verformungselement 67 vorgesehen, das den Druckraum 31 ausbildet bzw. begrenzt. Auf einem ersten Teilbereich des Verformungsbereichs 49 des Verformungselements 67 ist hier dabei eine erste elektrische Messschaltung 71 aufgebracht, während auf einem zweiten Teilbereich des Verformungselements 67 eine zweite Messschaltung 75 aufgebracht ist. Jede dieser Messschaltungen 71, 75 bildet hier eine Messeinrichtung zur Messung des Abgasdrucks aus. Diese Messschaltungen 71, 75 sind dann wiederum mit der Signal-Ermittlungsschaltung 53 verbunden. Ansonsten sind hier keine weiteren Komponenten in dem Gehäuse 25 angeordnet.

Des Weiteren ist die Signal-Ermittlungsschaltung 53 hier unmittelbar bzw. direkt mit mehreren, analoge Schnittstellen bildenden Anschlusselementen 77 des Gehäuses 25 verbunden. Eines dieser Anschlusselemente 77 bildet hier dabei den Anschluss für eine Stromversorgung aus, ein weiteres Anschlusselement bildet den Anschluss für Masse bzw. Erdung aus, die beiden weiteren Anschlusselemente bilden den Ausgang für die analogen Messsignale aus. Zudem wird der Druckraum 31 hier von den Außenwänden 43, 77 und einer inneren Trennwand 79 des Gehäuses 25 begrenzt. Das Verformungselement 67 ist dabei an der inneren Trennwand 79 festgelegt.

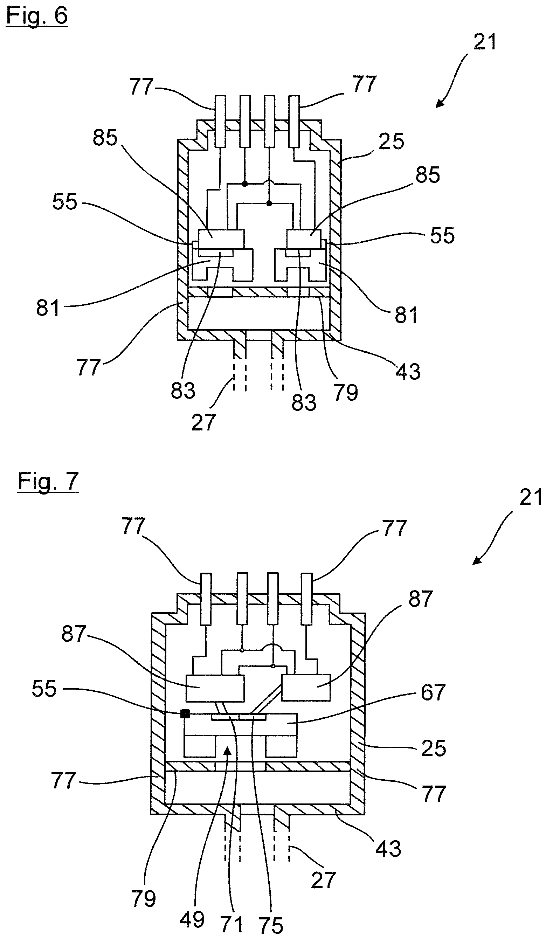

In Figur 6 ist eine dritte Ausführungsform der Druck-Erfassungseinrichtung 21 gezeigt. Im Vergleich zu der in Figur 5 gezeigten zweiten Ausführungsform sind hier zwei Verformungselemente 81 vorgesehen, von denen jede eine elektrische Messschaltung 83 aufweist. Zudem ist hier auch jeder Messschaltung 83 eine Signal-Ermittlungsschaltung 85 zugeordnet.

In Figur 7 ist eine vierte Ausführungsform der Druck-Erfassungseinrichtung 21 gezeigt. Im Vergleich zu der in Figur 5 gezeigten zweiten Ausführungsform ist hier jeder Messschaltung 71, 75 eine Signal-Ermittlungsschaltung 87 zugeordnet.

### Bezugszeichenliste

- 1: Brennkraftmaschine
- 3: Ansaugtrakt
- 5: Verbrennungseinrichtung
- 7: Verbrennungsluft
- 8: Abgasstrang
- 9: Abgas
- 11: Abgasturbolader
- 13: Abgasturbine
- 15: Luftverdichter
- 17: Abgasleitung
- 19: Drosselklappe
- 21: Druck-Erfassungseinrichtung
- 23: Messbereich
- 25: Gehäuse
- 27: Verbindungsleitung
- 29: Innenraum
- 31: Druckraum
- 33: Baueinheit
- 35: Trennwand
- 37: Messraum
- 39: Signalverarbeitungsraum
- 41: Trennwand
- 42: Trennwand
- 43: äußere Gehäusewand
- 45: Ausnehmung
- 47: Verformungselement
- 49: Verformungsbereich
- 51: elektrische Messschaltung
- 53: Signal-Ermittlungsschaltung
- 55: Temperatursensor
- 57: Signal-Umwandlungseinrichtung
- 59: Kurve
- 61: Kurve
- 63: Steuergerät
- 65: Stellmotor
- 67: Verformungselement
- 71: erste Messschaltung
- 75: zweite Messschaltung
- 77: Außenwand
- 79: innere Trennwand
- 81: Verformungselement
- 83: Messschaltung
- 85: Signal-Ermittlungsschaltung
- 87: Signal-Ermittlungsschaltung

## Patentansprüche

1. Brennkraftmaschine, insbesondere als Antriebsmotor für ein Fahrzeug, mit einer Motorbremseinrichtung (19, 63, 65), wobei die Motorbremseinrichtung ein, einem Abgasstrang (8) zugeordnetes Drosselelement (19), insbesondere eine Drosselklappe, zur Rückstauung eines von einer Verbrennungseinrichtung (5) emittierten Abgases (9) aufweist, und mit einer Messeinrichtung (51; 71; 83), mittels der der Abgasdruck an einem definierten Messbereich (23) des Abgasstrangs (8), in Abgas-Strömungsrichtung gesehen, stromauf des Drosselelements (19) messbar ist, wobei wenigstens eine weitere Messeinrichtung (51; 75; 83) vorgesehen ist, mittels der, insbesondere zur Realisierung einer redundanten Abgasdruckmessung, ebenfalls der Abgasdruck an dem definierten Messbereich (23) messbar ist, und dass die mittels der Messeinrichtungen (51; 71, 75; 83) ermittelten Messsignale an ein Steuergerät (63) zur Steuerung des Drosselelements (19), übermittelbar sind, wobei eine die Messeinrichtungen (51; 71, 75; 83) aufweisende Druck-Erfassungseinrichtung (21) ein Gehäuse (25) aufweist, in dem die Messeinrichtungen (51; 71, 75; 83) angeordnet sind, wobei in dem Gehäuse (25) auch ein Stellmotor (65) zur Einstellung der Drosselstellung des Drosselelements (19) angeordnet ist.

2. Brennkraftmaschine nach Anspruch 1, **dadurch gekennzeichnet, dass** an dem definierten Messbereich (23) von einer Abgasleitung (17) des Abgasstrangs (8) eine Verbindungsleitung (27) abzweigt, über die ein Innenraum (29) der Abgasleitung (17) druckübertragend mit einem Druckraum (31) einer die Messeinrichtungen (51; 71, 75; 83) aufweisenden Druck-Ermittlungseinrichtung (21) verbunden ist, insbesondere dergestalt, dass in dem Druckraum (31) im Wesentlichen nur der hydrostatische Abgasdruck wirkt.

3. Brennkraftmaschine nach Anspruch 1 oder 2, **dadurch gekennzeichnet, dass** die die Messeinrichtungen (51; 71, 75; 83) aufweisende Druck-Erfassungseinrichtung (21) wenigstens ein Verformungselement (47, 67, 81), insbesondere ein Membranelement und/oder eine Druckzelle, aufweist, das einen Druckraum (31) der Druck-Erfassungseinrichtung (21) nach außen begrenzt und/oder ausbildet und sich druckabhängig verformt, wobei jede Messeinrichtung eine auf ein Verformungselement (47; 67; 81) aufgebrachte elektrische Messschaltung (51; 71, 75; 83) aufweist.

4. Brennkraftmaschine nach Anspruch 3, **dadurch gekennzeichnet, dass** die jeweilige elektrische Messschaltung (51; 71, 75; 83) durch eine elektrische Widerstandsschaltung gebildet ist, oder dass die jeweilige elektrische Messschaltung durch eine elektrische Kapazitätsschaltung gebildet ist.

5. Brennkraftmaschine nach Anspruch 3 oder 4, **dadurch gekennzeichnet, dass** die Druck-Erfassungseinrichtung (21) ein einziges Verformungselement (67) aufweist, wobei auf einen Teilbereich des Verformungselements (67) eine elektrische Messschaltung (71) einer ersten Messeinrichtung aufgebracht ist, und wobei auf einen weiteren Teilbereich des Verformungselements (67) eine elektrische Messschaltung (75) einer zweiten Messeinrichtung aufgebracht ist.

6. Brennkraftmaschine nach Anspruch 3 oder 4, **dadurch gekennzeichnet, dass** die Druck-Erfassungseinrichtung (21) mehrere, insbesondere zwei, Verformungselemente (67; 81) aufweist, wobei auf ein erstes Verformungselement (67; 81) eine elektrische Messschaltung (51; 83) einer ersten Messeinrichtung aufgebracht ist, und wobei auf ein zweites Verformungselement (67; 81) eine elektrische Messschaltung (51; 83) einer zweiten Messeinrichtung aufgebracht ist.

7. Brennkraftmaschine nach einem der Ansprüche 3 bis 6, **dadurch gekennzeichnet, dass** jeder Messschaltung (71, 75; 83) eine Signal-Ermittlungsschaltung (85; 87) zugeordnet ist, mittels der ein den aktuellen Abgasdruck in dem Druckraum (31) repräsentierendes Messsignal ermittelbar ist, wobei bevorzugt vorgesehen ist, dass die jeweilige Signal-Ermittlungsschaltung (85; 87) durch einen applikationsspezifischen integrierten Halbleiterschaltkreis (ASIC) gebildet ist und/oder in dem Gehäuse (25) angeordnet ist.

8. Brennkraftmaschine nach einem der Ansprüche 3 bis 6, **dadurch gekennzeichnet, dass** den mehreren Messschaltungen (51; 71, 75) eine einzige Signal-Ermittlungsschaltung (53) zugeordnet ist, mittels der den aktuellen Abgasdruck in dem Druckraum (31) repräsentierende Messsignale ermittelbar sind, wobei bevorzugt vorgesehen ist, dass diese Signal-Ermittlungsschaltung (53) durch einen applikationsspezifischen integrierten Halbleiterschaltkreis (ASIC) gebildet ist und/oder in dem Gehäuse (25) angeordnet ist.

9. Brennkraftmaschine nach Anspruch 8, **dadurch gekennzeichnet, dass** die Druck-Erfassungseinrichtung (21) eine Signal-Umwandlungseinrichtung (57), insbesondere einen Mikrocontroller, aufweist, mittels der die von der wenigstens einen Signal-Ermittlungsschaltung (53; 85; 87) ermittelten Messsignale auf einen definierten Signal-Standard bringbar und/oder umwandelbar sind, wobei bevorzugt vorgesehen ist, dass die umgewandelten Messsignale einen gegenläufigen druckabhängigen Signalverlauf aufweisen und/oder dass die Signal-Umwandlungseinrichtung (57) in dem Gehäuse (25) angeordnet ist.

10. Brennkraftmaschine nach einem der Ansprüche 3 bis 9, **dadurch gekennzeichnet, dass** die Druck-Erfassungseinrichtung (21) wenigstens einen in einem definierten Nahbereich im Bereich einer Messschaltung (51; 71, 75; 83) angeordneten Temperatursensor (55) zur Messung und/oder Abschätzung der Temperatur der Messschaltung (51; 71, 75; 83) aufweist, wobei bevorzugt vorgesehen ist, dass der Temperatursensor (55) signalübertragend mit der wenigstens einen Signal-Ermittlungsschaltung (53; 85 ;87) verbunden ist und/oder dass der Temperatursensor (55) in dem Gehäuse (25) angeordnet ist.

11. Brennkraftmaschine nach einem der vorhergehenden Ansprüche, **dadurch gekennzeichnet, dass** das Gehäuse (25) wenigstens ein, eine analoge oder digitale Schnittstelle bildendes Anschlusselement (77) zur signaltechnischen Verbindung der Druck-Erfassungseinrichtung (21) mit einem Steuergerät (63) und/oder zur Verbindung der Druck-Erfassungseinrichtung (21) mit einer elektrischen Energie-Versorgungseinrichtung aufweist.

12. Brennkraftmaschine nach einem der vorhergehenden Ansprüche, **dadurch gekennzeichnet, dass** das Gehäuse (25) zusammen mit den darin angeordneten Komponenten eine Baueinheit ausbildet, die an der Brennkraftmaschine (1), insbesondere an einer Abgasleitung (17) und/oder an einem Aktuator-Gehäuse der Brennkraftmaschine (1), festlegbar ist, wobei bevorzugt vorgesehen ist, dass das Gehäuse (25) eine Befestigungseinrichtung aufweist, mittels der das Gehäuse (25) mit der Brennkraftmaschine verbindbar ist.

13. Verfahren zum Betreiben einer Brennkraftmaschine, insbesondere als Antriebsmotor für ein Fahrzeug und/oder einer Brennkraftmaschine nach einem der vorhergehenden Ansprüche, wobei die Brennkraftmaschine eine Motorbremseinrichtung (19, 63, 65) aufweist, die ein, einem Abgasstrang (8) zugeordnetes Drosselelement (19), insbesondere eine Drosselklappe, zur Rückstauung eines von einer Verbrennungseinrichtung (5) der Brennkraftmaschine emittierten Abgases (9) aufweist, wobei die Brennkraftmaschine eine Messeinrichtung (51; 71; 83) aufweist, mittels der der Abgasdruck an einem definierten Messbereich (23) des Abgasstrangs (8), in Abgas-Strömungsrichtung gesehen, stromauf des Drosselelements (19) gemessen wird, wobei wenigstens eine weitere Messeinrichtung (51; 75; 83) vorgesehen ist, mittels der, insbesondere zur Realisierung einer redundanten Abgasdruckmessung, ebenfalls der Abgasdruck an dem definierten Messbereich (23) gemessen wird, und dass die mittels der Messeinrichtungen (51; 71, 75; 83) ermittelten Messsignale an ein Steuergerät (63) zur Steuerung des Drosselelements (19), übermittelt werden, wobei eine die Messeinrichtungen (51; 71, 75; 83) aufweisende Druck-Erfassungseinrichtung (21) ein Gehäuse (25) aufweist, in dem die Messeinrichtungen (51; 71, 75; 83) angeordnet sind, wobei in dem Gehäuse (25) auch ein Stellmotor (65) zur Einstellung der Drosselstellung des Drosselelements (19) angeordnet ist.

14. Fahrzeug, insbesondere Nutzfahrzeug, mit einer Brennkraftmaschine nach einem der Ansprüche 1 bis 12.

## Claims

1. Internal combustion engine, in particular as a drive engine for a vehicle, comprising an engine braking device (19, 63, 65), wherein the engine braking device has a throttle element (19) which is associated with an exhaust gas section (8), in particular a throttle valve, for damming an exhaust gas (9) which is emitted by a combustion device (5), and comprising a measuring device (51; 71; 83) by means of which the exhaust gas pressure can be measured at a defined measuring region (23) of the exhaust gas section (8) upstream of the throttle element (19) as seen in the exhaust gas flow direction, wherein at least one further measuring device (51; 75; 83) is provided, by means of which the exhaust gas pressure can likewise be measured at the defined measuring region (23) in particular in order to realize a redundant exhaust gas pressure measurement, and that the measurement signals which are determined by means of the measuring devices (51; 71, 75; 83) can be transmitted to a controller (63) for controlling the throttle element (19), wherein a pressure-detecting device (21), which comprises the measuring devices (51; 71, 75; 83), has a housing (25) in which the measuring devices (51; 71, 75; 83) are arranged, wherein an actuating motor (65) for adjusting the throttle position of the throttle element (19) is also arranged in the housing (25).

2. Internal combustion engine according to Claim 1, **characterized in that** a connecting line (27) branches off from an exhaust gas line (17) of the exhaust gas section (8) at the defined measuring region (23), an interior chamber (29) of the exhaust gas line (17) being connected in a pressure-transmitting manner by means of the said connecting line to a pressure chamber (31) of a pressure-determining device (21) which comprises the measuring devices (51; 71, 75; 83), in particular in such a way that substantially only the hydrostatic exhaust gas pressure acts in the pressure chamber (31).

3. Internal combustion engine according to Claim 1 or 2, **characterized in that** the pressure-detecting device (21) which comprises the measuring devices (51; 71, 75; 83) has at least one deformation element (47, 67, 81), in particular a diaphragm element and/or a pressure cell, which delimits and/or forms a pressure chamber (31) of the pressure-detecting device (21) on the outside and is deformed in a pressure-dependent manner, wherein each measuring device has an electrical measuring circuit (51; 71, 75; 83) which is mounted onto a deformation element (47; 67; 81).

4. Internal combustion engine according to Claim 3, **characterized in that** the respective electrical measuring circuit (51; 71, 75; 83) is formed by a resistive electrical circuit, or **in that** the respective electrical measuring circuit is formed by a capacitive electrical circuit.

5. Internal combustion engine according to Claim 3 or 4, **characterized in that** the pressure-detecting device (21) has a single deformation element (67), wherein an electrical measuring circuit (71) of a first measuring device is mounted on a subregion of the deformation element (67), and wherein an electrical measuring circuit (75) of a second measuring device is mounted on a further subregion of the deformation element (67).

6. Internal combustion engine according to Claim 3 or 4, **characterized in that** the pressure-detecting device (21) has a plurality of, in particular two, deformation elements (67; 81), wherein an electrical measuring circuit (51; 83) of a first measuring device is mounted onto a first deformation element (67; 81), and wherein an electrical measuring circuit (51; 83) of a second measuring device is mounted onto a second deformation element (67; 81).

7. Internal combustion engine according to one of Claims 3 to 6, **characterized in that** a signal-determining circuit (85; 87) is associated with each measuring circuit (71, 75; 83), it being possible to determine a measurement signal, which is representative of the current exhaust gas pressure in the pressure chamber (31), by means of the said signal-determining circuit, wherein it is preferably provided that the respective signal-determining circuit (85; 87) is formed by an application-specific integrated semiconductor circuit (ASIC) and/or is arranged in the housing (25).

8. Internal combustion engine according to one of Claims 3 to 6, **characterized in that** a single signal-determining circuit (53) is associated with the plurality of measuring circuits (51; 71, 75), it being possible to determine measurement signals, which are representative of the current exhaust gas pressure in the pressure chamber (31), by means of the said signal-determining circuit, wherein it is preferably provided that this signal-determining circuit (53) is formed by an application-specific integrated semiconductor circuit (ASIC) and/or is arranged in the housing (25).

9. Internal combustion engine according to Claim 8, **characterized in that** the pressure-detecting device (21) has a signal-converting device (57), in particular a microcontroller, by means of which the measurement signals which are determined by the at least one signal-determining device (53; 85; 87) can be changed and/or can be converted to a defined signal standard, wherein it is preferably provided that the converted measurement signals have an opposite pressure-dependent signal profile and/or that the signal-converting device (57) is arranged in the housing (25).

10. Internal combustion engine according to one of Claims 3 to 9, **characterized in that** the pressure-detecting device (21) has at least one temperature sensor (55), which is arranged in a defined region of proximity in the region of a measuring circuit (51; 71, 75; 83), for measuring and/or estimating the temperature of the measuring circuit (51; 71, 75; 83), wherein it is preferably provided that the temperature sensor (55) is connected in a signal-transmitting manner to the at least one signal-determining circuit (53; 85; 87) and/or that the temperature sensor (55) is arranged in the housing (25) .

11. Internal combustion engine according to one of the preceding claims, **characterized in that** the housing (25) has at least one connection element (77) which forms an analogue or digital interface and which serves for signal-transmitting connection of the pressure-detecting device (21) to a controller (63) and/or for connection of the pressure-detecting device (21) to an electrical energy supply device.

12. Internal combustion engine according to one of the preceding claims, **characterized in that** the housing (25), together with the components which are arranged therein, forms a structural unit which can be fixed to the internal combustion engine (1), in particular to an exhaust gas line (17) and/or to an actuator housing of the internal combustion engine (1), wherein it is preferably provided that the housing (25) has a fastening device by means of which the housing (25) can be connected to the internal combustion engine.

13. Method for operating an internal combustion engine, in particular as a drive engine for a vehicle and/or an internal combustion engine according to one of the preceding claims, wherein the internal combustion engine has an engine braking device (19, 63, 65) which has a throttle element (19) which is associated with an exhaust gas section (8), in particular a throttle valve, for damming an exhaust gas (9) which is emitted by a combustion device (5) of the internal combustion engine, wherein the internal combustion engine has a measuring device (51; 71; 83) by means of which the exhaust gas pressure is measured at a defined measuring region (23) of the exhaust gas section (8) upstream of the throttle element (19) as seen in the exhaust gas flow direction, wherein at least one further measuring device (51; 75; 83) is provided, by means of which the exhaust gas pressure is likewise measured at the defined measuring region (23) in particular in order to realize a redundant exhaust gas pressure measurement, and that the measurement signals which are determined by means of the measuring devices (51; 71, 75; 83) are transmitted to a controller (63) for controlling the throttle element (19), wherein a pressure-detecting device (21), which comprises the measuring devices (51; 71, 75; 83), has a housing (25) in which the measuring devices (51; 71, 75; 83) are arranged, wherein an actuating motor (65) for adjusting the throttle position of the throttle element (19) is also arranged in the housing (25).

14. Vehicle, in particular utility vehicle, comprising an internal combustion engine according to one of Claims 1 to 12.

## Revendications

1. Moteur à combustion interne, en particulier en tant que moteur d'entraînement pour un véhicule, comprenant un dispositif de frein moteur (19, 63, 65), le dispositif de frein moteur présentant un élément d'étranglement (19) associé à un système de gaz d'échappement (8), en particulier un étrangleur, pour retenir un gaz d'échappement (9) émis par un dispositif de combustion (5), et comprenant un dispositif de mesure (51 ; 71 ; 83) permettant de mesurer la pression de gaz d'échappement dans une zone de mesure définie (23) du système de gaz d'échappement (8), vu dans le sens d'écoulement du gaz d'échappement, en amont de l'élément d'étranglement (19), au moins un dispositif de mesure supplémentaire (51 ; 75 ; 83) étant prévu qui permet également de mesurer la pression de gaz d'échappement dans la zone de mesure définie (23), en particulier pour réaliser une mesure de pression de gaz d'échappement redondante, et en ce que les signaux de mesure détectés au moyen des dispositifs de mesure (51 ; 71, 75 ; 83) peuvent être transmis à un appareil de mesure (63) pour commander l'élément d'étranglement (19), dans lequel un dispositif de détection de pression (21) présentant les dispositifs de mesure (51 ; 71, 75 ; 83) présente un boîtier (25) dans lequel sont disposés les dispositifs de mesure (51 ; 71, 75 ; 83), un moteur de réglage (65) pour le réglage de la position d'étranglement de l'élément d'étranglement (19) étant également disposé dans le boîtier (25).

2. Moteur à combustion interne selon la revendication 1, **caractérisé en ce que** dans la zone de mesure définie (23), une conduite de raccordement (27) bifurque d'une conduite de gaz d'échappement (17) du système de gaz d'échappement (8) et relie un espace intérieur (29) de la conduite de gaz d'échappement (17) en transmettant la pression à une chambre de pression (31) d'un dispositif de détection de pression (21) présentant les dispositifs de mesure (51 ; 71, 75 ; 83), en particulier de telle sorte que substantiellement seule la pression de gaz d'échappement hydrostatique est active dans la chambre de pression (31).

3. Moteur à combustion interne selon la revendication 1 ou 2, **caractérisé en ce que** le dispositif de détection de pression (21) présentant les dispositifs de mesure (51 ; 71, 75 ; 83) présente au moins un élément de déformation (47, 67, 81), en particulier un élément de membrane et/ou une cellule de compression qui limite vers l'extérieur et/ou constitue une chambre de pression (31) du dispositif de détection de pression (21) et se déforme en fonction de la pression, chaque dispositif de mesure présentant un circuit de mesure électrique (51 ; 71, 75 ; 83) appliqué à un élément de déformation (47 ; 67 ; 81).

4. Moteur à combustion interne selon la revendication 3, **caractérisé en ce que** le circuit de mesure électrique (51 ; 71, 75 ; 83) respectif est formé par un circuit résistif électrique, ou **en ce que** le circuit de mesure électrique respectif est formé par un circuit capacitif électrique.

5. Moteur à combustion interne selon la revendication 3 ou 4, **caractérisé en ce que** le dispositif de détection de pression (21) présente un seul élément de déformation (67), un circuit de mesure électrique (71) d'un premier dispositif de mesure étant appliqué sur une zone partielle de l'élément de déformation (67), et un circuit de mesure électrique (75) d'un deuxième dispositif de mesure étant appliqué sur une zone partielle supplémentaire de l'élément de déformation (67) .

6. Moteur à combustion interne selon la revendication 3 ou 4, **caractérisé en ce que** le dispositif de détection de pression (21) présente plusieurs, en particulier deux, éléments de déformation (67 ; 81), un circuit de mesure électrique (51 ; 83) d'un premier dispositif de mesure étant appliqué sur un premier élément de déformation (67 ; 81), et un circuit de mesure électrique (51 ; 83) d'un deuxième dispositif de mesure étant appliqué sur un deuxième élément de déformation (67 ; 81).

7. Moteur à combustion interne selon l'une quelconque des revendications 3 à 6, **caractérisé en ce que** chaque circuit de mesure (71, 75 ; 83) est associé à un circuit de détection de signal (85 ; 87) qui permet de détecter un signal de mesure représentant la pression de gaz d'échappement actuelle dans la chambre de pression (31), dans lequel il est prévu de préférence que le circuit de détection de signal (85 ; 87) respectif soit formé par un circuit intégré semi-conducteur spécifique à une application (ASIC) et/ou soit disposé dans le boîtier (25).

8. Moteur à combustion interne selon l'une quelconque des revendications 3 à 6, **caractérisé en ce que** les plusieurs circuits de mesure (51 ; 71, 75) sont associés à un seul circuit de détection de signal (53) qui permet de détecter des signaux de mesure représentant la pression de gaz d'échappement actuelle dans la chambre de pression (31), dans lequel il est prévu de préférence que ce circuit de détection de signal (53) respectif soit formé par un circuit intégré semi-conducteur spécifique à une application (ASIC) et/ou soit disposé dans le boîtier (25).

9. Moteur à combustion interne selon la revendication 8, **caractérisé en ce que** le dispositif de détection de pression (21) présente un dispositif de conversion de signal (57), en particulier un microcontrôleur qui permet de transformer et/ou de convertir en une nome de signal définie les signaux de mesure déterminés par ledit au moins un circuit de détection de signal (53 ; 85 ; 87), dans lequel il est prévu de préférence que les signaux de mesure convertis présentent une courbe de signal opposée dépendante de la pression, et/ou que le dispositif de conversion de signal (57) soit disposé dans le boîtier (25).

10. Moteur à combustion interne selon l'une quelconque des revendications 3 à 9, **caractérisé en ce que** le dispositif de détection de pression (21) présente au moins un capteur de température (55) disposé dans une zone de proximité définie au niveau d'un circuit de mesure (51 ; 71, 75 ; 83) et destiné à mesurer et/ou à estimer la température du circuit de mesure (51 ; 71, 75 ; 83), dans lequel il est prévu de préférence que le capteur de température (55) soit relié en transmettant des signaux audit au moins un circuit de détection de signal (53 ; 85 ;87) et/ou que le capteur de température (55) soit disposé dans le boîtier (25).

11. Moteur à combustion interne selon l'une quelconque des revendications précédentes, **caractérisé en ce que** le boîtier (25) présente au moins un élément de connexion (77) formant une interface analogique ou numérique pour relier en termes de signal le dispositif de détection de pression (21) à un appareil de commande (63) et/ou pour relier le dispositif de détection de pression (21) à un dispositif d'alimentation en énergie électrique.

12. Moteur à combustion interne selon l'une quelconque des revendications précédentes, **caractérisé en ce que** le boîtier (25) réalise avec les composants disposés dans celui-ci une unité modulaire qui peut être fixée sur le moteur à combustion interne (1), en particulier sur une conduite de gaz d'échappement (17) et/ou sur un boîtier d'actionneur du moteur à combustion interne (1), dans lequel il est prévu de préférence que le boîtier (25) présente un dispositif de fixation qui permet de relier le boîtier (25) au moteur à combustion interne.

13. Procédé d'exploitation d'un moteur à combustion interne, en particulier en tant que moteur d'entraînement pour un véhicule et/ou d'un moteur à combustion interne selon l'une quelconque des revendications précédentes, dans lequel le moteur à combustion interne présente un dispositif de frein moteur (19, 63, 65) qui présente un élément d'étranglement (19) associé à un système de gaz d'échappement (8), en particulier un étrangleur, pour retenir un gaz d'échappement (9) émis par un dispositif de combustion (5) du moteur à combustion interne, le moteur à combustion interne présentant un dispositif de mesure (51 ; 71 ; 83) permettant de mesurer la pression de gaz d'échappement dans une zone de mesure définie (23) du système de gaz d'échappement (8), vu dans le sens d'écoulement du gaz d'échappement, en amont de l'élément d'étranglement (19), au moins un dispositif de mesure supplémentaire (51 ; 75 ; 83) étant prévu qui permet également de mesurer la pression de gaz d'échappement dans la zone de mesure définie (23) en particulier pour réaliser une mesure de pression de gaz d'échappement redondante, et en ce que les signaux de mesure détectés au moyen des dispositifs de mesure (51 ; 71, 75 ; 83) sont transmis à un appareil de commande (63) pour commander l'élément d'étranglement (19), dans lequel un dispositif de détection de pression (21) présentant les dispositifs de mesure (51 ; 71, 75 ; 83) présente un boîtier (25) dans lequel sont disposés les dispositifs de mesure (51 ; 71, 75 ; 83), un moteur de réglage (65) destiné à régler la position d'étranglement de l'élément d'étranglement (19) étant également disposé dans le boîtier (25).

14. Véhicule, en particulier véhicule utilitaire, comprenant un moteur à combustion interne selon l'une quelconque des revendications 1 à 12.
